(19) Europäisches Patentamt
European Patent Office
Office européen des brevets

(11) **EP 2 034 260 B1**

(12) **EUROPEAN PATENT SPECIFICATION**

(45) Date of publication and mention
of the grant of the patent:
**15.01.2014   Bulletin 2014/03**

(51) Int Cl.:
**F25B 49/02** *(2006.01)*    *F25D 29/00 (2006.01)*

(21) Application number: **07115670.7**

(22) Date of filing: **04.09.2007**

(54) **Method for controlling a refrigeration appliance  and an appliance using such method**

Verfahren zur Regelung einer Kühlanlage und Kühlanlage zur Durchführung des Verfahrens

Procédé  de contrôle d'un réfrigérateur  et réfrigérateur utilisant un tel procédé

(84) Designated Contracting States:
**DE FR GB IT**

(43) Date of publication of application:
**11.03.2009   Bulletin 2009/11**

(73) Proprietor: **WHIRLPOOL CORPORATION**
**Benton Harbor**
**Michigan 49022 (US)**

(72) Inventors:
 • **Boer, Alessandro**
   **21025 Comerio (IT)**
 • **Paganini, Raffaele**
   **21025 Comerio (IT)**

 • **Leva, Alberto**
   **21025 Comerio (IT)**
 • **Piroddi, Luigi**
   **21025 Comerio (IT)**

(74) Representative: **Guerci, Alessandro**
   **Whirlpool Europe S.r.l.**
   **Patent Department**
   **Viale G. Borghi 27**
   **21025 Comerio (VA) (IT)**

(56) References cited:
   **EP-A- 1 178 271    EP-A- 1 524 484**
   **EP-A- 1 564 514    US-A- 5 699 674**

## Description

The present invention relates to a refrigeration appliance and to a method for controlling a refrigeration appliance having a refrigeration circuit with a compressor that is switched on and off depending on temperature differences between a set temperature and a high and low temperature values respectively. With the term refrigeration appliance we mean any kind of refrigerator or freezer or any combination thereof, either of the so-called static or of the no-frost type.

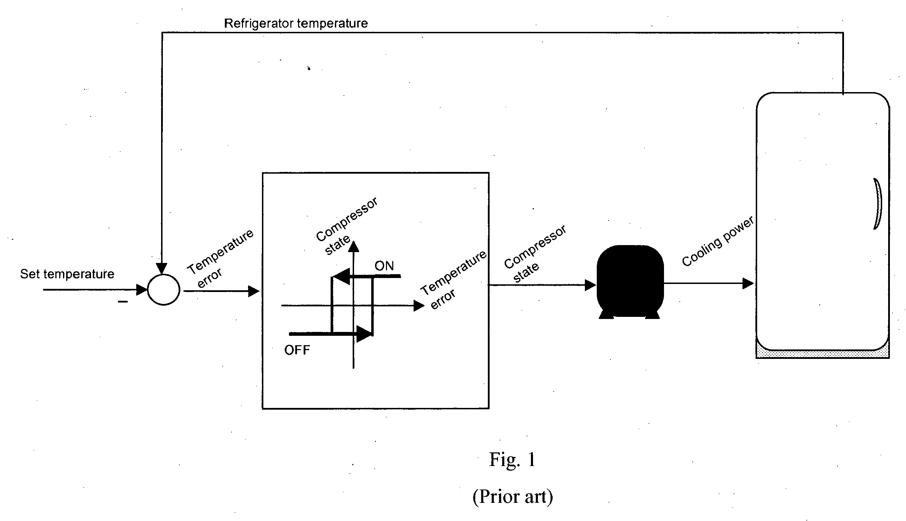

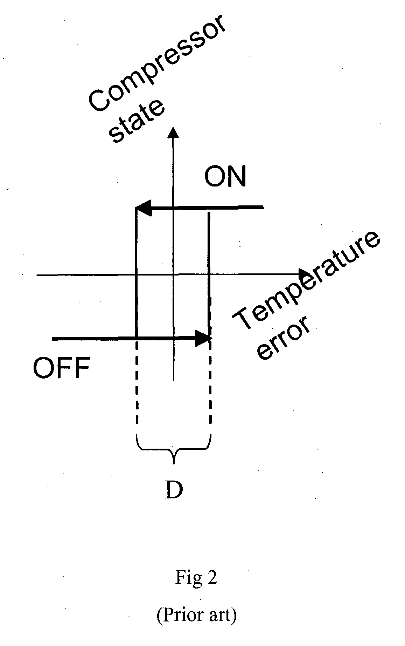

Most of the refrigeration appliances are cooled by on-off compressors through very simple hysteresis control logic, as shown in fig.1. EP-A-1524484 discloses a refrigerator in which the activation and deactivation of the compressor is carried out at a predetermined cut-on and cut-off temperatures respectively. In the older or cheaper model of appliances the function of the control logic was carried out by an electro-mechanic thermostat. In the recent years, with the electronics technology diffusion in the home appliance domain, most of these electromechanical thermostats were replaced by electronics devices. Such electronic devices perform in most of the cases the same control logic (hysteresis) using a more reliable electronic temperature sensor instead of a rough thermostat. Nevertheless both the electromechanical and the electronics thermostat need for a significant activity of calibration. Such activity consists on deciding for each appliance model the cut-on and cut-off error temperature for each temperature setting. Cut-on and cut-off error temperatures are well highlighted in fig. 2 in the well-known characteristic function of the hysteresis control. As the skilled in the art well knows, the overall behaviour of the appliance is mainly influenced by the cut-on and cut-off temperatures. In particular by their difference D. The higher such difference is, the wider the amplitude of the temperature swings will be and the less frequent the compressor cycling will be. On the other way round, the smaller the difference D will be the narrower the amplitude of the temperature swings will be and the more frequent the compressor cycling will be. The correct D value must provide not too frequent compressor cycling (D high enough) in order to reduce the energy consumption at each compressor start-up and to reduce the compressor damages. On the other hand the D value must me low enough to avoid food damages caused by too high temperature swings.

If we indicate $A_{osc}$ the amplitude of the temperature oscillation around the set point and $\omega_{osc}$ the frequency f the oscillation, these two criteria can be summarised as:

$$(1) \quad \begin{cases} A_{osc} \le A_{MAX} \\ \omega_{osc} \le \omega_{MAX} \end{cases}$$

Said values are clearly based on food preservation performances and energy performances as well. Generally a dedicated operator manually defines the correct D value according to these two criteria during the design phase. The correct D value will be influenced by the temperature sensor position, the appliance dimensions, the compressor power, the load conditions and many other factors. The dependency of D from so many factors implies that its definition requires a significant number of tests during the design phase and the final value will be a sort of compromise between the large amount of possible factors. The disadvantages in such a traditional approach can be summarised as:

- Time spending operations of experimental tests to define the correct D for the specific appliance (and this means a high time to market). In general this operation is defined as "Hysteresis calibration".
- Sub-optimal appliance working condition in response of load changes, external temperature changes, product to product change. The D value is in general identified considering a limited number of nominal working conditions: full loaded product or empty product, constant external temperature (i.e. 25°C), with a limited sample of products, neglecting the product ageing effects.
- Large number of control versions to be maintained: every appliance type has its own hysteresis control with its own D value.

The object of the present invention is to provide a refrigeration appliance and a control method of a refrigeration appliance overcoming the above-mentioned disadvantage.

To achieve the above object, there is provided a method for controlling a refrigeration appliance according to claim 1 and a refrigeration appliance according to claim 6. The gist of the present invention is to provide an automatic way to define the on-off temperature control in order to address the above mentioned disadvantages.

Further advantages of a control method according to the present invention, as well of a refrigeration appliance in which such method can be implemented, will become clear from the following detailed description, with reference to the attached drawings in which:

- figure 1 is a schematic view of a control loop with on-off compressor and hysteresis, according to prior art;
- figure 2 is an enlarged view of a portion of figure 1, showing the hysteresis control characteristics;
- figure 3 is a control block diagram of an adaptive on-off controller according to the present invention;
- figure 4 is an enlarged view of the hysteresis block used in the control system according to the present invention;
- figure 5 is a schematic view of a refrigeration appliance considered in the description;
- figures 6a-6c are three cases of applications of the present invention to the refrigeration appliance of figure 5;

- figure 7 is a schematic block diagram showing the basic scheme for relay-based identification exploring P(jω) in the Laplace domain;
- figure 8 shows the use of a filter in the controlling loop to make the oscillation occur at various points of P(jω);
- figure 9 shows the feasibility criterion of the proposed solution as seen on the Nyquist diagram;
- figure 10 shows the feasibility criterion of the proposed solution as seen on the magnitude Bode diagram;
- figure 11 is a diagram showing the typical behaviour of the controlled variable (temperature) during the operation of a adaptive on-off controller according to the invention;
- figure 12 shows diagrams according to an experimental test on a no-frost combined freezer-refrigerator, in which the compressor relay is controlled according to the present invention while the damper relay is controlled according to a standard control method; and
- figure 13 shows diagrams similar to those of figure 12, in which the damper is maintained always closed.

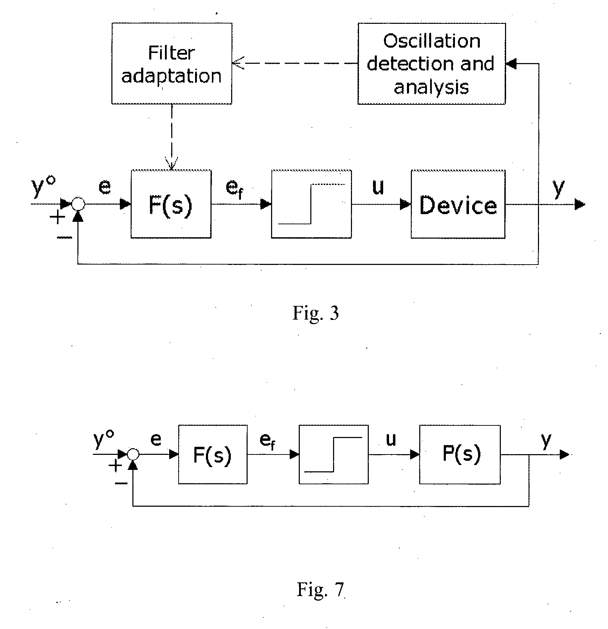

The control block diagram of the invention is indicated in figure 3. In particular, this solution provides a control algorithm that automatically detects the dynamics characteristics of the appliance and guarantees the above criteria (1) in all the working conditions, whatever is the product type.

The proposed control is composed by the following four main blocks:

- Oscillation detection and analysis block
- Filter adaptation
- Filter F(s)
- Hysteresis block

The main principle of the present invention stands in the describing function concept, i.e. in the well known method used by the skilled in the art to design a control system with non linear blocks such as on-off controllers.

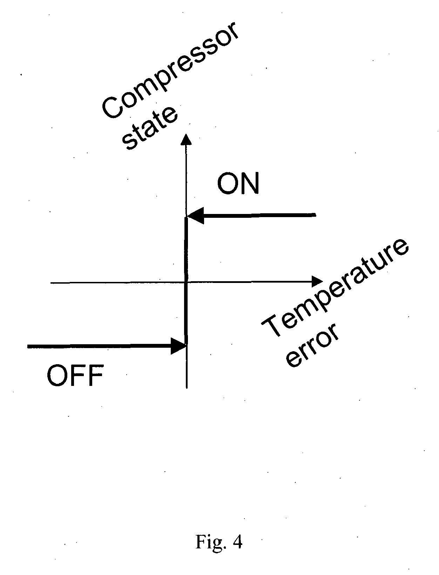

The solution according to the invention uses the very simple hysteresis block shown in figure 4. This block switches on the compressor when its input (the error temperature $e_f$ - figure 3 - filtered by F(s)) is greater than 0 and it will switch off the compressor when the same error is less than 0. The presence of this block will lead the appliance to a permanent oscillation characterised by a well precise oscillation temperature of the error temperature $A_{osc}$ and a well precise oscillation frequency $\omega_{osc}$. According to the invention, the "Filter adaptation" block and the "Oscillation detection and analysis" block will automatically tune the filter block F(s) in order to get a permanent oscillation with $A_{osc}$, $\omega_{osc}$ satisfying the criteria 1. These two blocks replace the above mentioned operation of "Hysteresis calibration" and this addresses the 1st disadvantage previously mentioned. The second disadvantage is addressed by the fact that the filter adaptation and oscillation detection can be let always active during the entire life of the product. In this way the appliance manufacturer can guarantee that despite the product ageing, working condition changes etc, the oscillation characteristics always respect the criteria (1), avoiding sub-optimal working conditions. The third disadvantage can be addressed by extending the use of such kind of solution to different product families. The criteria (1), are in general valid for almost any appliance type. It is a common and general rule that the refrigeration appliance compressor can't be switched on and off more than around 3 times per hour and the temperature swing amplitude has to be kept below than $\pm 3°C$ around the set point. This practical rule can be translated into a general formulation of the criteria (1):

$$(2) \quad \begin{cases} A_{osc} \leq 3°C \\ \omega_{osc} \leq 3\,\dfrac{cycle}{hrs} \end{cases}$$

The criteria (2) can be considered valid whatever the product size and the product type are. This allows using the same adaptive on-off controller shown in figure 3 to any appliance without any changes, avoiding the proliferation of control versions. Moreover the activation of the "Filter adaptation" block can be let active just during the design phase or at the end of the production line. A second possibility consist in letting the filter adaptation block always active: in this way the control system always will look for the optimal oscillation but the disturbances such as door opening, de-frosting can cause some temporary sub-optimal functioning. In this configuration the automatically found parameters values of the filter can be used by the appliance control for the diagnostic of failure conditions, which are then easily communicated to the user or directly to service. A third possibility in this sense can consist in activating the filter adaptation just during certain periods of the product working. For example, in the case considered later in this document in which a no-frost refrigerator is controlled according to the present invention, the "Filter adaptation" block will be switched on after each defrost cycle.

The remaining part of the description will be focused on describing the possible implementations of the proposed invention. Such description will provide all the theoretical references to explain and clarify the basic concept. For this reason, the remaining part of the description will frequently refer to specific concepts such as Transfer function, Describing function, Nyquist diagram, Bode diagram etc., which are well known to a man skilled in the art, particularly if he has a background in process systems analysis and control. Therefore a description of these basic concepts is considered not necessary in the present description.

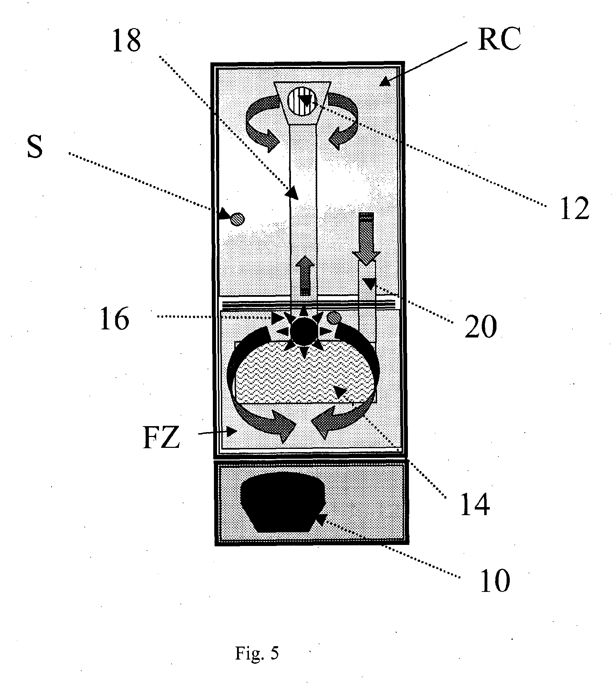

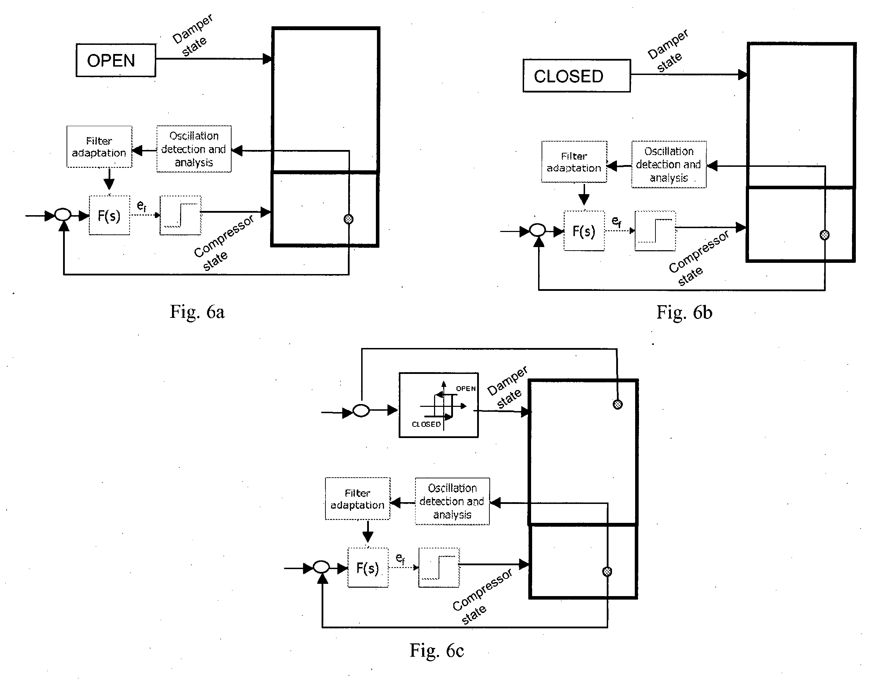

The appliance considered in the description is a Whirlpool model of the so-called bottom-mount full no frost type, particularly model ARC 7558 (Marysienka). This appliance (figure 5) comprises two compartments: the refrigerator compartment RC and the freezer compartment FZ. The appliance has two main actuators: a compressor 10 and an air-baffle 12 usually known also as a "damper", and it further comprises an evaporator 14, a circulation fan 16, a delivery air duct 18 delivering cold air from the evaporator 14 to the refrigeration compartment RC through the damper 12, a back flow air duct 20 for allowing an air flow circulation from the refrigeration compartment RC to the freezer compartment FZ, and a refrigerator temperature sensor S. The appliance control is in general composed of two temperature controllers: the temperature controller of the refrigerator compartment RC drives the state of the damper 12 according to the temperature of the refrigerator compartment RC, the temperature controller of the freezer compartment FZ drives the state of the compressor 10 according to the temperature of the freezer compartment FZ. In the following example we will consider the FZ temperature controller. In particular it will be shown how the general adaptive on-off controller (AOOC) scheme of figure 3 can be applied for the FZ temperature control. Three possible cases will be considered: AOOC with air baffle 12 always in "open position" (figure 6a), AOOC with air baffle 12 always in "close position" (figure 6b) and AOOC with air baffle 12 driven by an independent temperature control (figure 6c).

The well known describing function approximation states that a linear system (a refrigeration appliance in our case), subjected to relay feedback, will enter a permanent oscillation (or limit cycle) if the Nyquist curve $P(j\omega)$ of that linear system intersects the critical point locus of the relay. Hence, given the linear system and the relay characteristics, there can be only one possible limit cycle. For example, in the absence of relay hysteresis, the limit cycle is at the frequency $w_u$ at which $P(j\omega)$ intersects the real negative axis. That point is frequently termed the 'ultimate point', and it is widely used in the so-called "relay-based identification", where relay feedback is a way to figure out some information on frequency response of an unknown system.

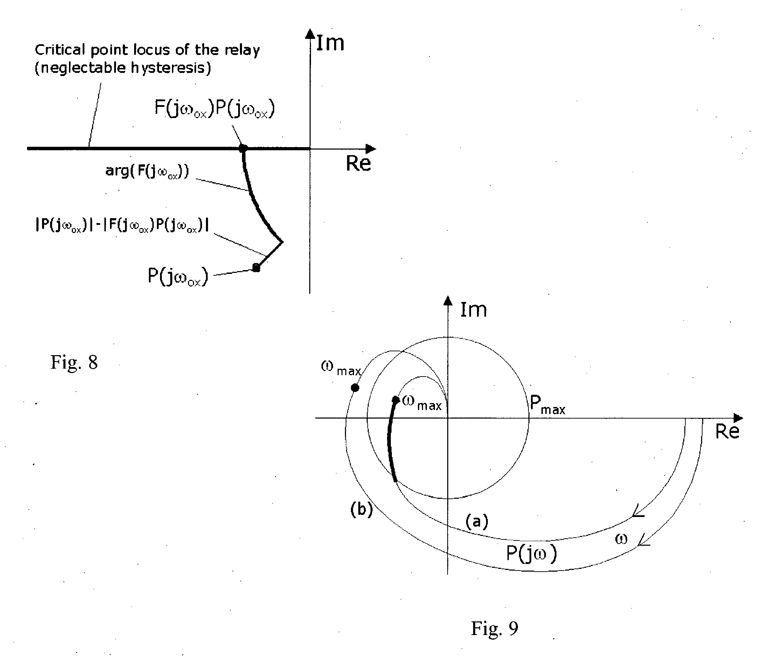

If a linear block F(s) is inserted in the loop, the frequency response of the linear dynamics seen by the relay becomes $F(j\omega)P(j\omega)$. The describing function approximation still holds, and a limit cycle may arise in the same hypotheses, simply replacing P with F·P. This principle is used in the relay-based identification domain, where by altering F one may 'explore' different points of $P(j\omega)$. For example, if F(s)=1/s and the relay has no (or negligible) hysteresis, the point found on $P(j\omega)$ is the one with phase -90°, since the limit cycle yields the ultimate point of $F(j\omega)P(j\omega)$, and arg°$(F(jw))$=-90°. The above principle is illustrated in figure 8.

The same idea can be used in another way, however, orienting its purpose to control rather than identification. By suitably designing F(s) in the scheme of the figure, it is in fact possible to select the characteristics of the induced oscillation so that they match some pre-specified criteria, if this is possible given $P(j\omega)$.

Such a scheme is particularly interesting for applications like that considered in the present invention, as both food preservation and energy consumption requirements can be expressed as desired characteristics of the obtained limit cycle. Clearly, for the design of a scheme like that of fig 7 to succeed, it is necessary that the dynamic behaviour of the device under control be represented by a known, constant-parameter $P(j\omega)$ in all the operating conditions of interest.

If this is not the case, one may devise an adaptive scheme, where the filter F(s) is modified on-line so that the limit cycle gets to match the specified criteria. Such an adaptive scheme was previously introduced in figure 3 and it represents the core of the invention.

The problem addressed herein requires adaptation because, as previously mentioned, the freezer dynamics depend on its contents, that are inherently changing with time, although they may remain constant for long periods of time, and in any case are substantially unknown. By applying the idea sketched out in the figures an adaptive on-off regulator is created, as the control output comes directly from the relay, and it provides the basis of the technical solution of the present invention. It will be now explained that solution and validity thereof with respect to the addressed problem.

The control goal is to achieve an oscillation of the freezer temperature $T_{scfz}$ (or, almost equivalently, of its measurement $T_{scfzf}$, provided by a conveniently located probe), the amplitude of which is less or equal to a given $A_{max}$, and the frequency of which is less or equal to a given $\omega_{max}$. Since the amplitude D of the relay command is fixed in the considered application, the problem corresponds to inducing a sustained oscillation at a frequency $\omega_{osc}$ such that

$$(3) \quad \begin{cases} |P(j\omega_{osc})| \le P_{max} \\ \omega_{osc} \le \omega_{max} \end{cases}$$

where

$$P_{max} = \frac{\pi A_{max}}{4D}$$

To do this, the idea is to iteratively modify the filter F(s). Under the assumption that both the magnitude (gain) and the phase of $P(j\omega)$ decrease monotonically

with ω in all the frequency range of interest, that iterative modification can be carried out in a straightforward way. That assumption is very reasonable and certainly verified in the case at hand, as it corresponds to stating that the process dynamics has essentially a low-pass behaviour, and does not exhibit low-frequency zeroes, nor any resonance or antiresonance.

The use of the filter F(s) in the proposed solution is illustrated in figure 8. As can be seen, the magnitude and phase effect of F(s) can cause the oscillation to occur at various points of P(jω), i.e., to have different frequencies and amplitudes. Apparently, however, it is not possible to achieve any (amplitude, frequency) couple, as the amplitude and the frequency of the oscillation must correspond to a point of P(jω). That is, if the available control signal is the output of a relay, the process dynamics reflects into an admissible set of oscillations. It is worth noting that changing the relay amplitude and/or hysteresis would simply modify its critical point locus, and therefore the admissible oscillations' set would remain unchanged: to widen that set, it is necessary to introduce a modulating control action.

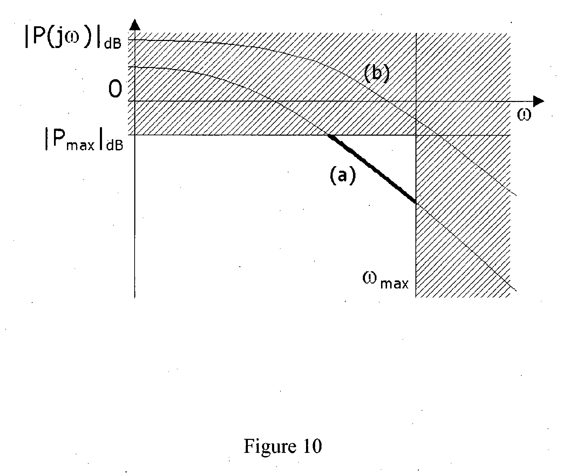

The above considerations lead to define the applicability limits of the proposed solution as in figures 9 and 10, where those limits are illustrated on the Nyquist and on the Bode magnitude diagrams. For a feasible solution to exist, there must be some points of P(jω) with frequency and magnitude fulfilling both constraints (3). For instance, in figure 9 the case (a) is feasible, while case (b) is not. Similarly, with reference to figure 10, case (a) is feasible, while case (b) is not.

. Given the meaning of P(jω) in the present contest, and the reasonable continuity assumptions introduced thereof, a simple frequency domain identification procedure, based on relay tests or also on open-loop sine experiments (which means trusting the filtering action hypothesis completely), can easily lead to decide whether or not the proposed solution is applicable to a given device or, equivalently, how much the constraints on the oscillation frequency and amplitude can be narrowed on that particular device.

As a final applicability remark, it must be noted that the entire describing function framework relies on the hypothesis that the dynamic block in the relay feedback loop is linear. This is apparently false in the case at hand, as the control inputs (particularly the damper, but also the compressor activation) act on the system (also) by modifying the thermal exchange coefficients between the masses where energy storage may be thought to be concentrated. Therefore, the effects of those inputs on the controlled temperatures cannot be described with a linear model.

Nonetheless, based on an extensive experimental activity carried out by the Applicant, two facts can be observed:

1. the response of the controlled variable to a step on any of the control inputs has a behaviour that can be represented by a linear, high-order model precisely enough (of course that linear model may vary depending on the control input used, and the state of the other inputs, as in the large the model is non-linear);

2. if a relay feedback loop is set up having one of the possible control inputs as the manipulated variable, the device does enter an oscillatory condition, and the aspect of the obtained oscillations is 'reasonably sinusoidal', i.e., not less similar to a sine wave than the controlled variable's behaviour observed in several literature cases where the describing function approximation was used successfully.

Hence, one can apply the describing function approximation to estimate a "point of the process frequency response", but bearing in mind that the so identified point belongs to a sort of local model, representing only the device's behaviour in that particular oscillatory condition. Any conclusion drawn (or action taken) with such a consciousness will make sense.

In other words, one can proceed to the derivation of the proposed solution, that involves the concept of 'process frequency response' and refers to that response with the symbol P(jω), by simply recalling that any point identified on P(jω) has to be thought of as belonging to the frequency response of a local model, representing the process dynamics in the vicinity of the corresponding frequency, and that a reasonable continuity exists among all those local models in the light of the 'reasonably linear' aspect of the step responses obtained from the model, that - conversely - covers all the frequencies.

To further explain this concept, given the invariance of the (non-linear) system under control, the feedback relay setting determines univocally the oscillatory behaviour, and its fundamental frequency component can be envisaged as the result of a given amplitude-phase characteristic of the system at that frequency. It is only for ease of representation, and for uniformity with respect to the notation used in the literature, that such characteristic is thought of as a single point of the frequency response of a (locally approximating in the frequency domain) linear system.

The adaptive on-off controller (AOOC) according to the invention is composed of a relay, a linear filter, and the filter adaptation algorithm. The AOOC components are described in the following.

The relay used in the proposed solution has ideally no hysteresis (fig. 4), and in practice it has only the amount of hysteresis needed to cope with measurement noise, yet allowing to safely assume that its critical point locus be the real negative semiaxis. It would be possible, and easy, to generalise the proposed algorithm to the use of a relay with hysteresis, as the only effect of hysteresis is that the critical point locus in not the real negative semiaxis, but a straight line parallel to it and located in the third quadrant. For simplicity and clarity, however, here the algorithm is derived and used with a hysteresis-free relay.

The linear filter used in the AOOC can be any general transfer function, for instance it can be chosen among proportional control, proportional-integral (PI) control, proportional-derivative (PD) control or proportional-derivative-integral (PID) control. In the case of PID control, the transfer function of the filter is as follows:

$$F(s) = Kp\left(1 + s \cdot Tz + \frac{1}{sTp}\right)$$

The filter has preferably a transfer function (in the Laplace form) of the following type:

$$F(s) = \frac{1 + sT_z}{1 + sT_p}$$

so that, by means of convenient choice of the two time constants $T_z$ and $T_p$, a phase contribution in the range (-90°,+90°) can be introduced at any frequency of interest. The gain of F(s) is equal to 1 for convenience reasons. Parameters $T_z$ and $T_p$ are determined from the phase shift (or correction) that the filter has to introduce at the oscillation frequency.

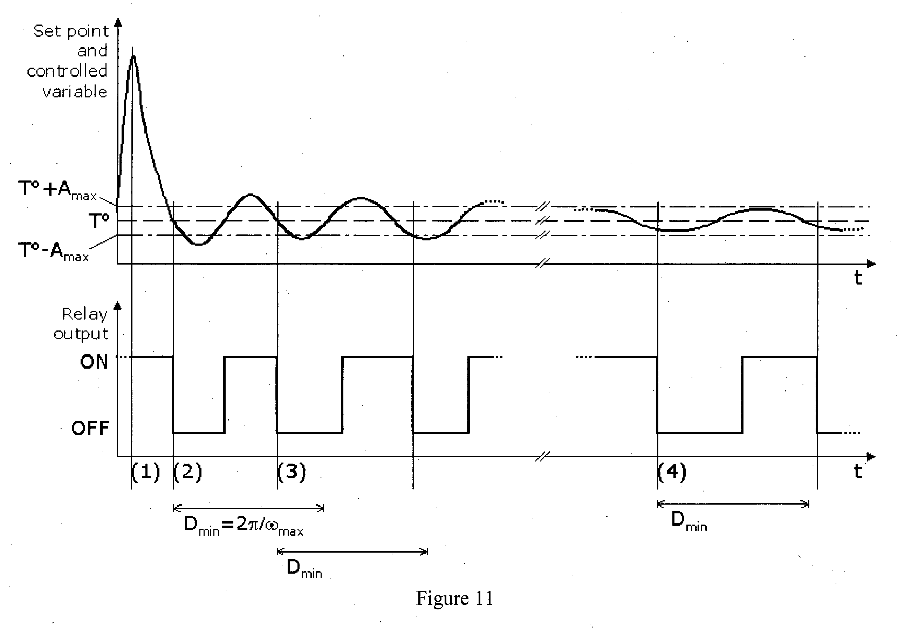

To obtain the AOOC, the scheme of figure 3 is therefore implemented and operated as follows. To illustrate its operation, a possible behaviour of the controlled variable is schematically shown in figure 11, where the main facts and time instants concerning the AOOC operation are evidenced.

1. The AOOC is activated at the end of a defrosting operation. Referring to figure 11, this is time (1).
2. When the AOOC is activated, the relay without hysteresis is connected to the control input. The relay input is the error filtered by F(s). Initially, F(s) is set to 1, or initialised so as to provide a pre-specified phase shift at a pre-specified frequency. This may be useful for tailoring (off-line) the AOOC behaviour to a particular device.
3. The AOOC waits for the controlled variable to cross the set point. In figure 11, this is time (2). The AOOC then starts monitoring the oscillation until the next relay toggle in the same direction as that of time (2). In figure 11, the oscillation ends at time (3).
4. At the end of any oscillation, its characteristics are checked against the specification constraints, i.e., it is checked whether or not the oscillation amplitude is smaller than $A_{max}$, and its duration larger than $D_{min} = 2p/w_{max}$. If this is the case, F(s) remains unchanged and the AOOC continues operating as a fixed relay-plus-filter controller. Any subsequent oscillation is checked, however, so that F(s) may be modified when required. It is also possible to decide whether or not an oscillation has to be considered depending on the state of the system, and particularly of its control inputs. In fact, some of those inputs (typically, for example, the damper) produce an apparent and sensitive change of the process dynamics' time scale, and in some of the possible situations may be beneficial not to modify the filter. Taking such decisions has to be based essentially on experiments, and therefore the AOOC algorithm provides the necessary functionality.

5. If the oscillation does not comply with the specifications, the filter is modified. In figure 11, this happens for example at time (3).

To modify the filter, first it is determined whether the oscillation frequency must be increased or decreased. Recalling figures 9 and 10, this also means reducing or increasing the oscillation amplitude, respectively.

If the oscillation frequency has to be increased, the filter time constants are computed so that, at the current oscillation frequency, the phase of the filter decreases of a pre-specified quantity; in the opposite case, the filter time constants are computed so that, at the current oscillation frequency, the phase of the filter increases of a pre-specified quantity. If the overall filter phase is negative (i.e., if a lag is required), $T_z$ is set to zero and only a pole is used; in the opposite case, a structure with zero and high-frequency pole is parameterised.

6. The AOOC iterates the same behaviour for every subsequent oscillation. It is worth noting that, strictly speaking, any conclusion drawn based on the describing function approximation should wait for the oscillation considered to become *permanent.* For efficiency reasons, however, in the AOOC the filter is modified at every complete oscillation. This is justified by the fact that, in virtually any device the AOOC may come across, it is possible to relate the characteristics of the permanent oscillations to their start-up phase.

In the particular case considered herein, however, the only conclusion drawn from the analysis of the first oscillation is de facto the sign of the phase shift variation that is required on the part of the filter F(s): such a simple decision can be taken safely based on the first oscillation.

In the light of the considerations above, a final and more general remark can be derived, i.e. the filter design, as carried out herein, is largely independent of the appliance model, the only important fact being the magnitude and phase monotonicity, in the sense stated above. In fact, at each algorithm iteration, the required system information is 'condensed' at the oscillation frequency, and re-gathered based on the actual device's behaviour.

This remark allows to be confident on the method's capability to deal with machine-to-machine variability, while the simulation tests performed prove that the method is suitable for the typical, 'average' dynamics of the considered appliances.

Some examples of the numerous tests performed by the applicant will be now presented to show how the adaptation method works, using the same freezer model of figure 5. For all the reported tests a set-point of -23.5 °C is assumed for the freezer temperature probe, while the control specifications prescribe a $\pm 2$ °C temperature swing, and a minimum oscillation period is assumed of 8 min. The performed tests include

1. Standard control of the compressor and damper relays,
2. AOOC adaptive control of the compressor relay, standard control of the damper relay,
3. AOOC adaptive control of the compressor relay with the damper always open,
4. AOOC adaptive control of the compressor relay with the damper always closed,

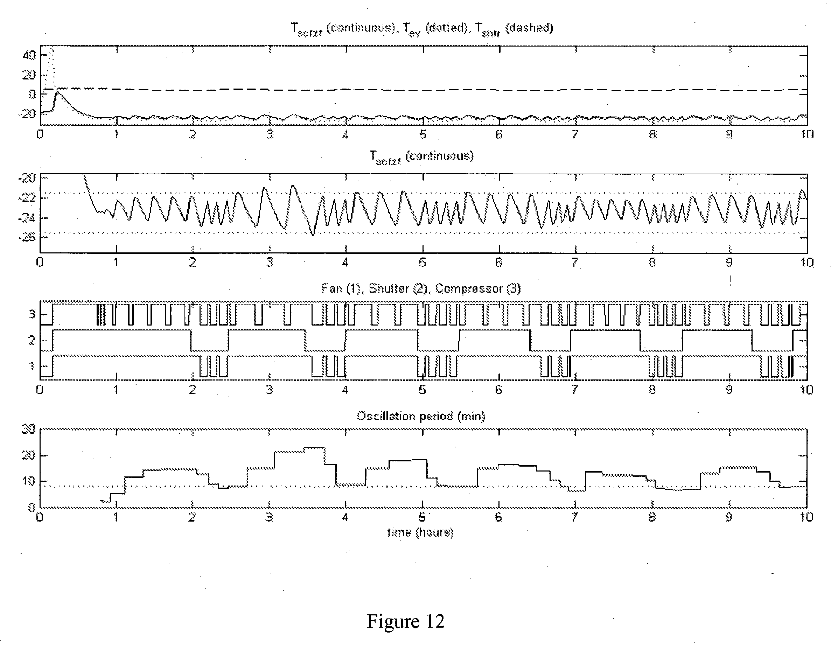

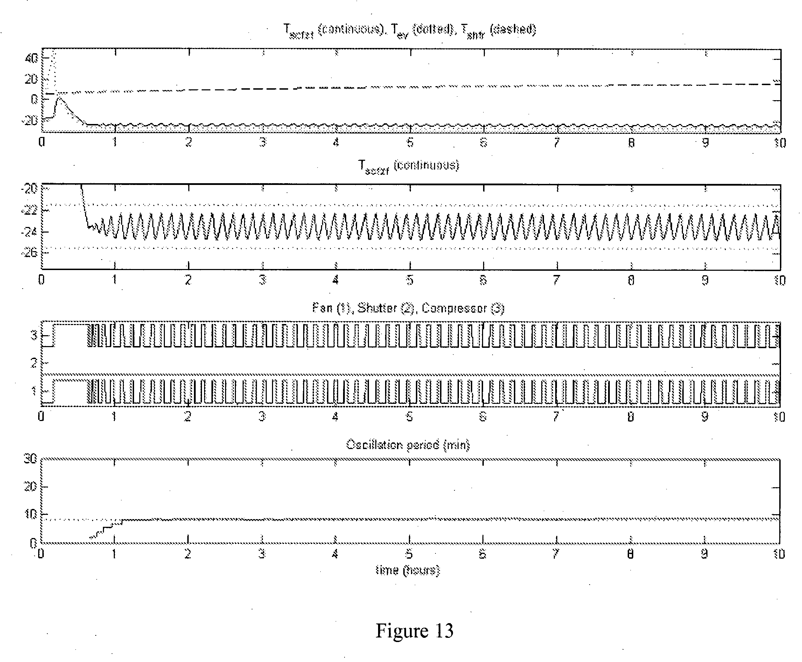

For brevity, we report here only one test of type 2 (test A) and one of type 4 (test B). For both tests, the corresponding figure (figure 12 or 13, where the time axis is in hours) shows

- The behaviour of temperatures $T_{scfzf}$ (freezer probe), $T_{ev}$ (evaporator), $T_{shfr}$ (refrigerator probe);

- The detail of $T_{scfzf}$ (freezer probe), with the required range limits;

- the on-off commands of compressor activation (top), damper opening (middle), and fan activation (bottom);

- the measured oscillation period for filter adaptation (where appropriate).

**TEST A -** ADAPTIVE CONTROL OF THE COMPRESSOR RELAY, STANDARD CONTROL OF THE DAMPER RELAY

In this test the adaptive filter relay control scheme is used to command the compressor activation, while the standard hysteresis relay setting is adopted for the control of the damper opening, activating the adaptation after the defrosting phase. The results are reported in figure 12

After the defrosting phase, forty-seven cycles are detected, some of which induce a filter modification. Notice that the oscillation characteristics may vary significantly (as an indirect effect of the 2nd relay) even when the filter transfer function is kept constant. As a result, specifications are apparently attained. When the damper is closed, just a temporary reduction of oscillation amplitude and period is observed, with a corresponding increased switching frequency of the compressor.

**TEST B** - ADAPTIVE CONTROL OF THE COMPRESSOR RELAY, DAMPER ALWAYS CLOSED.

In this test the adaptive filter relay control scheme is used for compressor control, while the damper is kept always closed. The fan is on when the compressor is on, off otherwise. The results are reported in figure 13.

Also in this case, specifications are attained, though the oscillation period is shorter, and nearer to the 8-min limit. After an initial phase requiring adjustments, the filter is kept constant, resulting in a nearly stationary behaviour. It is worth noting that, since the presence of two independent relay controllers may generate double-oscillator type chaotic dynamics, in test A a steady state oscillation is not reached, and the filter is continuously re-tuned. Conversely, when the damper command is kept fixed during the whole operating time (either open or closed), either a permanent oscillation (a case not shown here) or a quasi-stationary behaviour (as in test B) is eventually obtained, and the adaptive algorithm can be switched off.

It is important to notice that the method according to the invention can be used for refrigerators having several compartments or cavity. In this case every cavity will have its adaptive filter that will be iteratively adjusted according to the described method.

**Claims**

1. Method for controlling a refrigeration appliance having a refrigeration circuit with a compressor (10) which is switched on or off depending on a predetermined temperature range around a predetermined temperature set value, **characterised in that** the amplitude of actual temperature oscillation and frequency thereof is detected and automatically adjusted according to pre-set values, wherein a temperature error (e) between a sensed temperature and a set temperature is assessed, such error value (e) being processed by an adaptive filter (F(s)) which is iteratively adjusted according to sensed temperature oscillations and/or frequencies thereof, the filtered error signal ($e_f$) being then applied to a hysteresis block.

2. Method according to claim 1, wherein said pre-set values are based on food preservation and energy performances.

3. Method according to claim 1 or 2, wherein the filter has the following transfer function:

$$F(s) = \frac{1 + sT_z}{1 + sT_p}$$

where $T_z$ and $T_p$ are two time constants determined from the phase shift that the filter has to introduce at the oscillation frequency.

4. Method according to claim 3, wherein the automatically adjusted parameters $(T_z , T_p)$ of the filter (F(s)) are used for the diagnostic of failure conditions.

5. Method according to any of the preceding claims, wherein the hysteresis block corresponds to a hysteresis-free relay.

6. Refrigeration appliance having a refrigeration circuit with a compressor (10), a temperature sensor for detecting temperature inside the appliance and a controller operatively connected to said compressor (10) and to said temperature sensor for switching on or off the compressor depending on a predetermined temperature range, **characterised in that** the controller comprises a closed-loop system in which an error signal (e) between the sensed temperature and a set temperature is assessed, the system including an adaptive filter (F(s)) in which the error signal (e) is filtered on the basis of sensed temperature oscillations and frequencies thereof, the closed-loop system comprising a hysteresis block driving the compressor.

7. Refrigeration appliance according to claim 6, wherein the filter has the following transfer function:

$$F(s) = \frac{1 + sT_z}{1 + sT_p}$$

where $T_z$ and $T_p$ are two time constants determined from the phase shift that the filter has to introduce at the oscillation frequency.

8. Refrigeration appliance according to claim 6 or 7, wherein the hysteresis block is a relay.

9. Refrigeration appliance according to any of claims 6 to 8, wherein the adaptive filter (F(s)) is working on the basis of actual amplitude of temperature oscillation and/or frequency thereof.

**Patentansprüche**

1. Verfahren zum Steuern eines Kühlgeräts, das einen Kühlkreislauf mit einem Kompressor (10) hat, der in Abhängigkeit von einem vorbestimmten Temperaturbereich um einen vorbestimmten Temperatur-Sollwert ein- oder ausgeschaltet wird, **dadurch gekennzeichnet, dass** die Amplitude der tatsächlichen Temperaturschwankung und die Frequenz derselben erfasst und automatisch entsprechend voreingestellten Werten angepasst werden, wobei ein Temperaturfehler (e) zwischen einer abgefühlten Temperatur und einer eingestellten Temperatur abgeschätzt wird, wobei ein solcher Fehlerwert (e) durch einen adaptiven Filter (F(s)) verarbeitet wird, der iterativ entsprechend den abgefühlten Temperaturschwankungen und/oder Frequenzen derselben angepasst wird, wobei das gefilterte Fehlersignal ($e_1$) danach auf einen Hystereseblock angewendet wird.

2. Verfahren nach Anspruch 1, wobei die voreingestellten Werte auf Nahrungsmittelkonservierungs- und Energieleistungen beruhen.

3. Verfahren nach Anspruch 1 oder 2, wobei der Filter die folgende Übertragungsfunktion hat:

$$F(s) = \frac{1 + sT_z}{1 + sT_p} ,$$

wobei $T_z$ und $T_p$ zwei Zeitkonstanten, bestimmt aus der Phasenverschiebung, die der Filter bei der Schwankungsfrequenz einführen muss, sind.

4. Verfahren nach Anspruch 3, wobei die automatisch angepassten Parameter $(T_z, T_p)$ des Filters (F(s)) für die Diagnose von Störungszuständen verwendet werden.

5. Verfahren nach einem der vorhergehenden Ansprüche, wobei der Hystereseblock einem hysteresefreien Relais entspricht.

6. Kühlgerät, das einen Kühlkreislauf mit einem Kompressor (10), einen Temperatursensor zum Erfassen der Temperatur innerhalb des Geräts und ein Steuergerät, das operativ mit dem Kompressor (10) und mit dem Temperatursensor verbunden ist, um den Kompressor in Abhängigkeit von einem vorbestimmten Temperaturbereich ein- oder auszuschalten, hat, **dadurch gekennzeichnet, dass** das Steuergerät ein Regelkreissystem umfasst, in dem ein Fehlersignal (e) zwischen der abgefühlten Temperatur und einer eingestellten Temperatur abgeschätzt wird, wobei das System einen adaptiven Filter (F(s)) einschließt, in dem das Fehlersignal (e) auf der Grundlage von abgefühlten Temperaturschwankungen und Frequenzen derselben gefiltert wird, wobei das Regelkreissystem einen Hystereseblock umfasst, der den Kompressor ansteuert.

**7.** Kühlgerät nach Anspruch 6, wobei der Filter die folgende Übertragungsfunktion hat:

$$F(s) = \frac{1 + sT_z}{1 + sT_p},$$

wobei $T_z$ und $T_p$ zwei Zeitkonstanten, bestimmt aus der Phasenverschiebung, die der Filter bei der Schwankungsfrequenz einführen muss, sind.

**8.** Kühlgerät nach Anspruch 6 oder 7, wobei der Hystereseblock ein Relais ist.

**9.** Kühlgerät nach einem der Ansprüche 6 bis 8, wobei der adaptive Filter (F(s)) auf der Grundlage der tatsächlichen Amplitude der Temperaturschwankung und/oder der Frequenz derselben arbeitet.

## Revendications

**1.** Procédé de commande d'un appareil de réfrigération ayant un circuit de réfrigération avec un compresseur (10) qui est activé et désactivé en fonction d'une plage de températures prédéterminée autour d'une valeur de consigne de température prédéterminée, **caractérisé en ce que** l'amplitude de l'oscillation effective de la température et sa fréquence est détectée et automatiquement réglée en fonction de valeurs préétablies, dans lequel une erreur de température (e) entre une température détectée et une température de consigne est évaluée, cette valeur d'erreur (e) étant traitée par un filtre adaptatif (F(s)) qui est réglé itérativement en fonction d'oscillations de température détectées et/ou de leurs fréquences, le signal d'erreur filtré ($e_f$) étant ensuite appliqué à un bloc d'hystérésis.

**2.** Procédé selon la revendication 1, dans lequel lesdites valeurs préétablies sont basées sur des performances de conservation d'aliments et d'énergie.

**3.** Procédé selon la revendication 1 ou 2, dans lequel le filtre a la fonction de transfert suivante :

$$F(s) = \frac{1 + sT_z}{1 + sT_p}$$

où $T_z$ et $T_p$ sont deux constantes de temps déterminées à partir du déphasage que le filtre doit introduire à la fréquence d'oscillation.

**4.** Procédé selon la revendication 3, dans lequel les paramètres réglés automatiquement ($T_z$, $T_p$) du filtre (F(s)) sont utilisés pour le diagnostic des conditions de défaillance.

**5.** Procédé selon l'une quelconque des revendications précédentes, dans lequel le bloc d'hystérésis correspond à un relais sans hystérésis.

**6.** Appareil de réfrigération ayant un circuit de réfrigération avec un compresseur (10), un capteur de température pour détecter la température à l'intérieur de l'appareil et un contrôleur connecté opérationnellement audit compresseur (10) et audit capteur de température pour activer et désactiver le compresseur en fonction d'une plage de températures prédéterminée, **caractérisé en ce que** le contrôleur comprend un système en boucle fermée dans lequel un signal d'erreur (e) entre la température détectée et une température de consigne est évalué, le système comportant un filtre adaptatif (F(s)) dans lequel le signal d'erreur (e) est filtré en fonction d'oscillations de température détectées et de leurs fréquences, le système en boucle fermée comprenant un bloc d'hystérésis qui commande le compresseur.

**7.** Dispositif de réfrigération selon la revendication 6, dans lequel le filtre a la fonction de transfert suivante :

$$F(s) = \frac{1 + sT_z}{1 + sT_p}$$

où $T_z$ et $T_p$ sont deux constantes de temps déterminées à partir du déphasage que le filtre doit introduire à la fréquence d'oscillation.

**8.** Dispositif de réfrigération selon la revendication 6 ou 7, dans lequel le bloc d'hystérésis est un relais.

**9.** Dispositif de réfrigération selon l'une quelconque des revendications 6 à 8, dans lequel le filtre adaptatif (F(s)) fonctionne d'après l'amplitude effective de l'oscillation de température et/ou de sa fréquence.

Fig. 1
(Prior art)

Fig 2

(Prior art)

Fig. 3

Fig. 7

Fig. 4

EP 2 034 260 B1

Fig. 5

Fig. 6a

Damper state

OPEN

Oscillation detection and analysis

Filter adaptation

$e_f$

F(s)

Compressor state

Fig. 6b

Damper state

CLOSED

Oscillation detection and analysis

Filter adaptation

$e_f$

F(s)

Compressor state

Fig. 6c

Damper state

OPEN

CLOSED

Oscillation detection and analysis

Filter adaptation

$e_f$

F(s)

Compressor state

Fig. 9

$P_{max}$

$P(j\omega)$

(a)

(b)

$\omega_{max}$

$\omega_{max}$

$\omega$

Re

Im

Critical point locus of the relay
(neglectable hysteresis)

$F(j\omega_{ox})P(j\omega_{ox})$

$arg(F(j\omega_{ox}))$

$|P(j\omega_{ox})| - |F(j\omega_{ox})P(j\omega_{ox})|$

$P(j\omega_{ox})$

Im

Re

Fig. 8

Figure 10

Figure 11

Figure 12

Figure 13

20

**EP 2 034 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1524484 A